# EUROPEAN PATENT APPLICATION

(11) **EP 2 492 709 A1**
(43) Date of publication of application: **29.08.2012**
(21) Application number: 11156088.4
(22) Date of filing: 25.02.2011
(51) Int. Cl.: G01S 13/34

(54) **FMCW radar system**

(71) Applicant: Nederlandse Organisatie voor Toegepast -Natuurwetenschappelijk Onderzoek TNO, 2628 VK Delft (NL)
(72) Inventor: de Jong, Govardus Adrianus Hubertus, 2628 VK Delft (NL); van Rossum, Wilhelmus Lambertus, 2628 VK Delft (NL)
(74) Representative: Jansen, Cornelis Marinus

(57) **Abstract**

Frequency swept radar signals are transmitted from a plurality of transmitter antennas with predetermined timing offsets between the frequency sweeps of respective ones of the transmitters. A combination of reflections of the transmitted frequency swept radar signals is received. A filter bank separates a plurality of beat signals from respective frequency bands in the received combination of reflections. Transmitter antennas at respective different spatial locations may be used and intermediate signals derived from the separated beat signals may be summed to form a synthetic aperture radar image.

## Description

### Field of the invention

The invention relates to an FMCW radar system and method.

### Background

US 5,345,470 discloses methods of handling interference between a plurality of FMCW radars. As is known per se, an FMCW radar has a transmitter that transmits a frequency swept radar signal and a receiver that mixes down received reflections with a local oscillator signal that performs a corresponding sweep. Thus, a reflecting target gives rise to a mixed down signal at constant beat frequency, the beat frequency depending on the time delay between transmission and reception, and therefore on distance to the target.

US 5,345,470 points out that the presence of a plurality of FMCW radar systems within each other's reception range can give rise to problematic interference. Some of such interference can be removed by low pass filtering of the beat signal, but there is a lower limit on the low pass filter bandwidth that can be used, because the bandwidth also limits the distance range at which reflections can be detected. US 5,345,470 proposes various methods to suppress interference without using a very narrow bandwidth. The spectrum of each FMCW radar is spread, by using different frequencies and modulation slopes for different sweeps, so that the same interference does not occur in every sweep, if at all. Direction selectivity is used to reduce interferences and for radars that produce remaining strong interference signals different frequency bands are used.

US 5,345,470 does not suggest that the interference can be used to advantage.

### Summary

Among others, it is an object to provide for a greater number of useful FMCW signals in an FMCW radar system.

An FMCW radar system is provided that comprises
- a plurality of transmitters configured to transmit frequency swept radar signals;
- a sweep synchronization module configured to cause the transmitters to transmit the frequency swept radar signals with predetermined timing offsets between the frequency sweeps of respective ones of the transmitters;
- a receiver configured to receive a combination of reflections of the transmitted frequency swept radar signals, the receiver having an output for a received signal;
- a signal processing circuit coupled to the output and configured to separate a plurality of beat signals from respective frequency bands in the received signal respectively.

The transmission of frequency sweeps that start at different timing offsets results in reflected signals at the receiver in different frequency bands. These are separated at the receiver, for example with a filter bank. The filter bank may comprise a plurality of filters for the respective bands that each filter the same received signal. In this way, reflections of signals from different transmitters that are received at the same time can be separated.

In an embodiment the separated signals are used to generate a synthetic aperture radar signal by summing signals derived for the respective bands.

### Brief description of the drawing

These and other objects and advantageous aspects will become apparent from a description of exemplary embodiments, using the following figures
Figure 1 shows an FMCW radar system
Figure 2 shows frequency sweeps

### Detailed description of exemplary embodiments

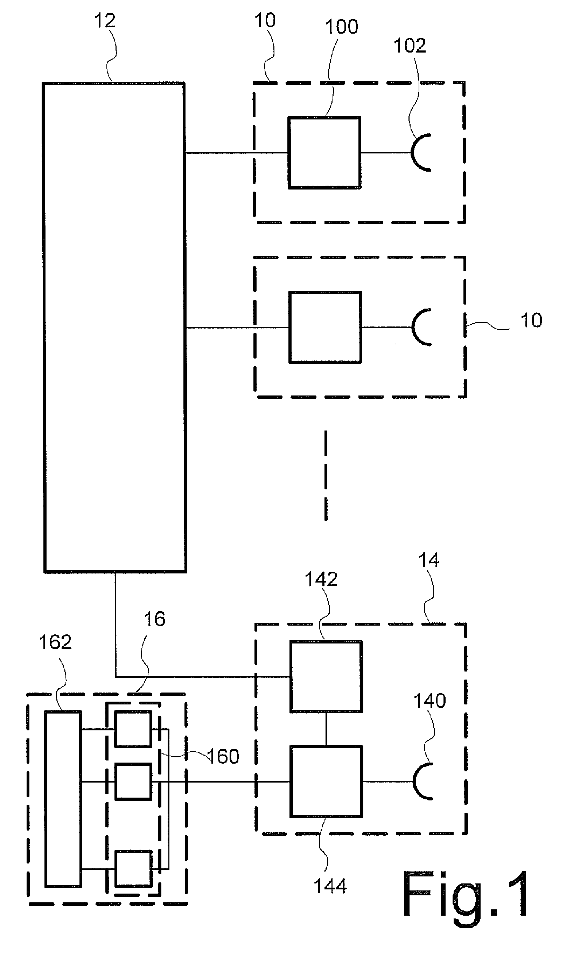

Figure 1 shows an FMCW radar system with a plurality of transmitters 10, a sweep synchronizing circuit 12, a receiver 14 and a signal processing circuit 16.

Each transmitter 10 comprises a controllable oscillator 100 and a transmitter antenna 102 with an input coupled to controllable oscillator 100. Controllable oscillators 100 of transmitters 10 may be digital oscillators operating under control of a common clock circuit (not shown), that is oscillators that determine successive time discrete digital oscillator signal values for a series of time points defined by the clock signal, and convert these values into an analog signal. The transmitter antennas of different transmitters 10 are arranged in a spatial array. Sweep synchronizing circuit 12 has a plurality of outputs coupled to control inputs of controllable oscillator 100 of the transmitters 10.

Receiver 14 comprises an antenna 140, a controllable local oscillator 142 and a mixer 144. Controllable local oscillator 142 may be a digital oscillator operating under control of the same clock circuit (not shown) as the controllable oscillators 100 of transmitters 10. Mixer 144 has signal inputs coupled to antenna 140 and local oscillator 142. Controllable local oscillator 142 has a control input coupled to an output of sweep synchronizing circuit 12. Mixer 144 has an output coupled to signal processing circuit 16. Signal processing circuit 16 comprises a filter bank 160, which may be implemented as plurality of band filter modules (e.g. analog or digial filter modules) and a combination module 162. Filter bank 160 has an input (e.g. the band filter modules in the filter bank have inputs) coupled to the output of receiver 14 and outputs coupled to combination module 162.

In operation, sweep synchronizing circuit 12 controls controllable oscillators 100 of transmitter 10 to perform the same frequency sweeps, at mutual time offsets relative to each other. Sweep synchronizing circuit 12 controls local oscillator 142 to perform a similar sweep. In an embodiment, the sweep of one of controllable oscillators 100 may be used for local oscillator 142.

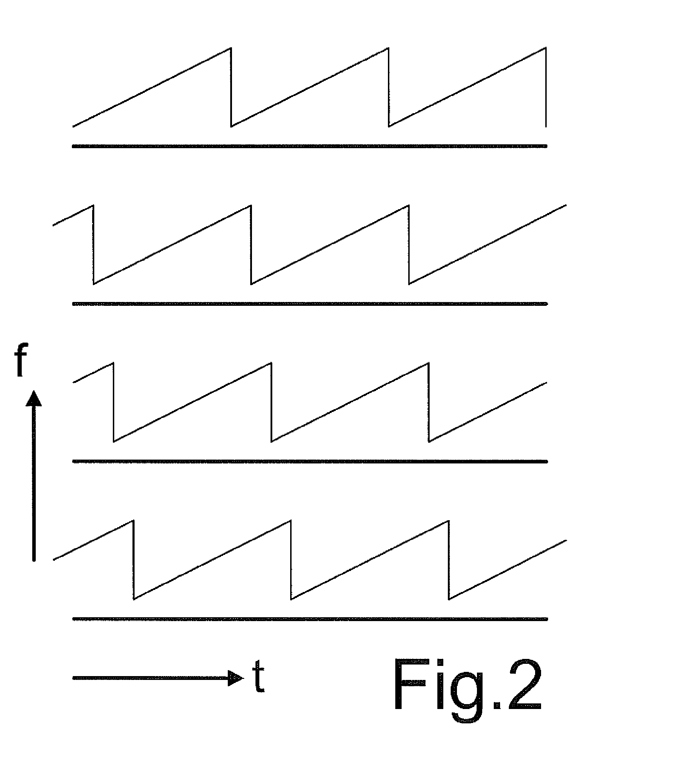

Figure 2 illustrates the frequency sweeps of controllable oscillators 100 of the different transmitters 10, in terms of frequency as a function of time. The sweeps start at evenly spaced time points, separated by time intervals DT. The durations of the time intervals are selected so that DT>MaxR/c, wherein c is the speed of light, S the sweep slope (frequency sweep range divided by sweep duration, so that S*DT is beat frequency bandwidth corresponding to a single transmitter) and MaxR is the maximum target distance (from transmitter to target to receiver). Sweep synchronizing circuit 12 may be configured to trigger the start of sweeps of controllable oscillators 100 of transmitter 10 at time points t(n)=n*DT with DT=MaxR/c or a larger value for example.

In an embodiment transmitter antennas 102 are located close together (i.e. so close that the effect of reflection time delays due to differences between their positions is insignificant compared to the time offsets). In this case, the frequency differences DF(n,m) between beat frequencies due to reflections of signals from different transmitters 10 (labelled n, m) from a single target corresponds to the time offsets between the frequency sweeps of controllable oscillators 100 of the different transmitters 10: DF(n,m)=S*DT*(n-m).

In an embodiment, a sweep of 150 Mhz and a sweep time of 0.3 msec are used, giving rise to a sweep rate of 500 GHz/sec. In this case a basic time interval of DT= 4 µs (DF(2,1) = 2MHz) may be used, for targets at a distance less than 1200 m (corresponding to a maximum monostatic one-way range of 600 m). Controllable oscillators 100 may be configured to sweep from 9.40 GHz to 9.55 GHz for example.

Band filter modules of filter bank 160 each pass a respective frequency band with a bandwidth of at most S*DT, successive bands being mutually offset by S*DT. In this way each band filter module passed beat frequencies due to reflections of signals from a different one of the transmitters 10. Filter bank 160 feeds the filtered signals to combination module 162.

In an embodiment, combination module 162 may perform a synthetic aperture function. In this embodiment, combination module 162 computes an output signal by summing signals derived from band filter bank 160.

Synthetic aperture radar techniques are known per se. One such technique involves transmitting from transmitter antennas at different locations and receiving return signals resulting from these transmissions at a receiver antenna. Such a synthetic aperture radar technique assumes that the phase and amplitude of return signals received at the receiver antenna in response to transmissions from different transmitter antennas can be determined. For a target in the far field, the return signals can be used to simulate reception of signals transmitted by the target at virtual antenna elements located at midpoints between the positions of the receiver antenna and respective ones of transmitter antennas. The phase differences and amplitude ratios of the return signals from different transmitter antennas are the same as the phase differences and amplitudes of the signals of the virtual antenna elements.

The reception signals of a synthetic phased array of the virtual antenna elements can be computed by summing the return signals, optionally after multiplying these return signals with predetermined phase and amplitude factors. Thus an antenna with the directivity of the synthetic phased array of antenna elements at midpoints between the positions of receiver antenna and respective ones of transmitter antennas can be simulated. The predetermined phase and amplitude factors may be selected to optimize the antenna patterns, using design techniques that are known per se from the theory of phased array design. In one example, where the virtual antenna elements are located along a line, the phases of the return signals may be adapted according to the opposite of the phase shift that results from a wave travelling along the line, to realize an antenna with maximum sensitivity along the direction of the line. In another example, when the virtual antenna elements are in a same plane, a summation without factors (i.e. effectively with the same factor for all antenna elements) improves directivity in a direction broadside of the plane. Sums obtained after multiplication with respective different sets of predetermined phase and/or amplitude factors may be used to sense targets in different directions.

In an embodiment, combination module 162 is adapted to apply this known technique to the signals separated by filter bank 160. In the case of a linear frequency sweep (and neglecting effects before and after a sweep) the time dependence of the signal of each transmitter corresponds to
exp ( i * 2 * PI * t * Fo + i * PI * S * ( t -t(n)) ² )
Herein t is time, Fo is the base frequency of the sweep, S the sweep slope and t(n) is the time offset of the start of the sweep of an antenna of a transmitter labelled "n". For any target, the mixed down signal at the output of mixer 144 is a sum of contributions due to different transmitters 10. When the receiver signal 142 is identical to the signal from module 100 of transmitter 0 (t(0)=0) then each contribution corresponds to a term
C(n) exp { i * 2 * PI * Fo * tt(n) + i*2*PI*S*(t(n) + tt(n))*t ― pi*S*(t(n)+tt(n)) ² } Herein C(n) is a factor proportional to the reflection coefficient of the target (which may also depend on the transmitter-target-receiver geometry) and tt(n)=DR(n)/c is the travel time from transmitter antenna n to the target to the receiver antenna. The exponent of the contribution contains a term that is proportional to time t. The coefficient of t in this term is the frequency shift. As can be seen, this frequency shift contains two parts: a part S * t(n) proportional to t(n) and a part S * tt(n) that is proportional to tt(n). The first part S * t(n) has the effect that the contributions due to different transmitters lie in different frequency bands that are passed by different ones of band filter modules of filter bank 160. For reflections of signals from different transmitters 10 this first part has predetermined values independent of the target. Combination module 162 eliminates this part from the outputs of filter bank 160.

The second part S * tt(n) represents the conventional FMCW shift, which depends on the target. When there is a plurality of targets the contribution contains a sum of terms wherein different values of tt(n) may give rise to a plurality of frequencies, from which distances to the targets can be derived.

Furthermore, the exponent of the contribution contains a time independent phase term Fo * tt(n) that is proportional to the travel time back and forth to the target and a quadratic term (known as the residual video phase) which is generally much smaller and can be removed, if desired, using techniques that are known per se.

After separation and correction for the target independent part, combination module 162 produces intermediate signals that correspond to reception of reflections of signals from respective transmitters 10. Each intermediate signal is a sum of contributions from different targets, if any, in the form of C(n) exp { i * 2 * PI * ( Fo * tt(n) + S * tt(n)*t ) } Combination module 162 sums these intermediate signals, optionally after multiplying the intermediate signals with predetermined phase and/or amplitude factors that may be derived from phased array theory. The sensitivity of the resulting sum to targets depends on target direction according to a synthetic antenna pattern. Sums obtained after multiplication with different sets of predetermined phase and/or amplitude factors may be used to sense targets in different directions.

Combination module 162 and/or filter bank 160 may be realized using a digital signal processing circuit, for example using a programmable digital signal processing circuit with a program memory that contains code for making the programmable digital signal processing circuit perform the functions of sweep synchronizing circuit 12, the combination module 162 and/or band filter modules in filter bank 160. Such a digital signal processing circuit may also be used to realize at least part of controllable oscillators 100 and/or controllable local oscillator 142 and/or mixer 144. Alternatively, part or all of these circuits may be realized using dedicated circuits.

Although an embodiment of an FMCW radar system has been described in detail, it should be noted that other FMCW radar systems may also make use of a plurality of transmitters with mutual offsets. For example, instead of applying the signal from mixer 144 of receiver 14 directly to filter bank 160, which makes is necessary to use a filter bank that provides for filtering according to a plurality of different frequency bands, for example using a plurality of band filter modules, the signal may be mixed with a plurality of further local oscillator signals in different mixer modules before applying the signal to filter bank 160. The different further local oscillator signals may be used to shift the different frequency bands of the signal from mixer 144 to a same frequency band. In this case filter bank 160 may comprise similar band filter modules 160 for a same frequency band. Although an embodiment of a filter bank 160 with distinct band filter modules, or mixers plus band filter modules, for different frequency bands has been shown, it should be appreciated that one band filter module or mixer with band filter module may be time shared for different frequency bands, or that filter bank 160 comprises a part of a band filter modules that is shared by different band filter modules.

In an embodiment, instead of a single receiver 14 with a single receiver antenna 140 at one location, a plurality of receivers with receiver antennas 140 at different locations may be used. The signals from each receivers may be band filtered as described for receiver 14 to separate different signals for different combinations of transmitters 10 and receivers. In this way reception of signals transmitted by the target at virtual antenna elements located at midpoints between the positions of different receiver antennas and respective ones of transmitter antennas can be simulated. In this embodiment combination module 162 may receive signals from groups of band filter modules, each from a respective receiver. Combination module 162 may be configured to sum contributions derived from the band filter modules of all groups, optionally after applying predetermined factors. In this way it is possible to realize an antenna pattern of a phased array with a larger number of antenna elements. The number of different locations of antenna elements that can be realized in this way equals the product of the number of transmitters and the number of receivers. Simultaneous reception may be used for all combinations of transmitters and receivers, which speeds up processing and reduces artefacts due to target displacement.

In principle, a simulated phased array can also be realized by using a single transmitter with a transmitter antenna at one location and a plurality of receivers with transmitter antennas at respective different locations. However, the use of transmitters that transmit the same FMCW sweeps with mutual time offsets has the advantage that fewer receivers are needed.

In an embodiment, instead of a single receiver 14, a plurality of receivers coupled to the same receiver antennas 140 may be used. In this way the same signals can be separated as with a single receiver 14. Thus part of the separation performed by filter bank 160 may be performed by the receivers.

Although an embodiment has been shown wherein all transmitters 10 use the same sweep, distinguished only by mutual time offsets, it should be appreciated that alternatively sweeps may be used that have further differences. For example, it may be noted that the frequency band spacing is determined by the product of the slope S and the time offset t(n). Hence the same band separation may be realized by using different slopes in different transmitters, combined with different offsets. Furthermore, offsets between the starting frequencies of the sweeps may be used.

In the illustrated embodiment the transmitter antennas 102 are preferably located so close that differences between their positions do not significantly affect the frequency bands of the received signals (a position difference DX in the direction of a target may give rise to a frequency shift of 2*S*DX/c, DX being so small that this shift is less than one tenth or preferably one hundredth of the bandwidth). In another embodiment transmitter antennas 102 may be so far apart that the resulting frequency shift is comparable to the bandwidth or even greater. In this case, directive transmitter antennas and/or a directive receiver antenna may be used and the time offsets may be adapted so that the locations of the frequency bands do not overlap for targets in the direction of highest sensitivity of the antenna. That is, if a transmitter antenna n has an offset DX(n) of the position component along this direction relative to a reference direction, the time offsets may be shifted by 2*DX(n)/c, the time offset t(n) of the sweep of an antenna n being selected t(n)=n*DT + 2*DX(n)/c. Thus, the frequency bands can be kept separate. In an embodiment, the transmitter antennas and/or the receiver antennas may have rotatable directions of maximum sensitivity. The antennas may be rotatable for example, or they may be phased arrays with adjustable phase control. In this case, sweep synchronizing circuit 12 is preferable configured to adapt the time offsets t(n) in correspondence with variation of DX(n) due to rotation of the direction of maximum sensitivity.

## Claims

1. An FMCW radar system, comprising
- a plurality of transmitters configured to transmit frequency swept radar signals;
- a sweep synchronization module configured to cause the transmitters to transmit the frequency swept radar signals with predetermined timing offsets between the frequency sweeps of respective ones of the transmitters;
- a receiver configured to receive a combination of reflections of the transmitted frequency swept radar signals, the receiver having an output for a received signal;
- a signal processing circuit coupled to the output and configured to separate a plurality of beat signals from respective frequency bands in the received signal respectively.

2. An FMCW radar system according to claim 1, wherein each transmitter comprises a respective transmitter antenna, the respective transmitter antennas being located at respective different spatial locations, the signal processing circuit is configured to sum intermediate signals derived from the separated beat signals.

3. An FMCW radar system according to claim 2, wherein a signal processing circuit is configured to compute a plurality of sums of intermediate signals, derived by multiplication of the intermediate signals with respective sets of phase factors.

4. An FMCW radar system according to any of the preceding claims, wherein each transmitter comprises a respective transmitter antenna and the receiver comprises a receiver antenna, the receiver antenna and/or the transmitters having a redirectable antenna pattern, wherein the sweep synchronization module is configured to adjust the timing offsets in correspondence with redirection of the antenna pattern.
plurality of beat signals.

5. An FMCW radar detection method, comprising
- transmitting frequency swept radar signals from a plurality of transmitter antennas with predetermined timing offsets between the frequency sweeps at respective ones of the transmitter antennas;
- receiving a combination of reflections of the transmitted frequency swept radar signals;
- separating a plurality of beat signals from respective frequency bands in the received combination of reflections.

6. A method according to claim 5, wherein the transmitter antennas are located at respective different spatial locations, intermediate signals derived from the separated beat signals being summed.

7. A method according to claim 6, comprising compute a plurality of sums of intermediate signals, derived by multiplication of the intermediate signals with respective sets of phase factors.

8. A method according to any of claims 5-7, wherein the combination of reflections is received with a receiver antenna, the receiver antenna and/or the transmitter antennas having a redirectable antenna pattern, wherein the sweep synchronization module is configured to adjust the timing offsets in correspondence with redirection of the antenna pattern.

9. A computer program product comprising a program of instructions that, when executed by a programmable computer will cause the computer to
- control timing offsets between the frequency sweeps of signals at respective transmitter antennas ;
- separate a plurality of beat signals from respective frequency bands in a received combination of reflections of the signals.

10. A computer program product according to claim 9, configured to cause the computer to form a synthetic aperture image from the intermediate signals derived from the separated beat signals, by multiplication of the intermediate signals with respective sets of phase factors.
